# EUROPEAN PATENT APPLICATION

(11) **EP 4 272 606 A1**
(43) Date of publication of application: **08.11.2023**
(21) Application number: 23464007.6
(22) Date of filing: 18.04.2023
(51) Int. Cl.: A47J 31/00, A47J 31/057, A47J 31/02, A47J 31/18, A47J 31/44

(54) **PROCESS OF MAKING COFFEE**

(30) Priority: 05.05.2022 RO 202200232
(71) Applicant: Bulea, Caius Casiu, 420033 Bistrita (RO)
(72) Inventor: Bulea, Caius Casiu, 420033 Bistrita (RO)
(74) Representative: Isoc, Dorin

(57) **Abstract**

The process for preparing coffee can be used, especially, for individual, personalized consumption.

For this, the portioned raw material of coffee is placed in a preparation cup with a volume of about *150-200* ml with walls of about *1...10* mm thick, made of specific materials such as glass, porcelain, ceramic, etc., cup preheated to about *30... 70°*C after which to prepare a portion of coffee, put approx. *20...30* g of finely grinded coffee, the cup is placed on a vibrating table, which is put into operation, boiling water is added and a waiting time of about *10...60* seconds is required until the infusion mixture is homogenized and the coffee suspension settles at the bottom of the cup. The vibration frequency and the amplitude of the table vibrations are chosen between *10.. 100* Hz, respectively between *0.1...5.0* mm so that the liquid in the cup does not splash, do not spill from the cup, and the homogenization and settling should occur in the shortest possible time and the duration of the vibration is chosen so that the color of the foam/cream changes from dark brown to light brown depending on the desired taste.

## Description

The invention relates to a process for making coffee, especially for individual, personalized consumption.

In order to make the coffee, for individual consumption, there are known infusion methods when a portion of properly ground coffee beans is introduced into a predetermined amount of water at boiling temperature where it is maintained for a well-determined period. What differs, from one process to another, is the source of energy that must make the heating as uniform and homogeneous as possible.

All the known processes try to take from the dry and properly ground plant material, then subjected to processing (infusion) with hot water, the most important set of principles and aromas that correspond to the preferences of as many consumers as possible.

The processes such as those mentioned above can be considered unsatisfactory as the ways of extracting the principles and aromas are relatively small and often incomplete compared to the vegetable matter used.

A coffee-making installation is known which, for a uniform extraction of coffee aromas, provides an oscillating movement of the filter in front of the nozzle during the making procedure (US 9,867,494).

The disadvantage of this solution is that it affects only the grounds, not the mixture intended for consumption in its volume.

Other solutions use in the coffee-making process (US 8,250,971, US 8,758,844, US 7,794,772, US 7,763,300), with the role of homogenizing the temperature, water supply pumps operated in vibrating or oscillating regime.

The disadvantage of these solutions is that they only affect the process of homogenization of the temperature of the brewing water and have no input on the process of extracting coffee aromas.

The process according to the invention:
a) provides an increased homogeneity of the mixture, as the mixture for one portion of coffee is vibrated uniformly.
b) controls the homogenization quality by the frequency and amplitude of the vibration, the taste quality can be associated with the color of the foam/cream.

The advantages of the invention are that through the described process, the richness of principles and aromas extracted is much increased and much more diversified.

An example of the invention is given below, which assumes that for a portion of coffee a preparation cup is used with a volume of about *150-200* ml with thick walls of about *1...10* mm, made of specific materials such as glass, porcelain, ceramics, etc., except for metallic materials. Before use, the mug is preheated to around *30...70°C.* To prepare a portion of coffee, put approx. *20...30* g of finely grinded coffee and the cup is placed on a vibrating table.

Turn on the vibrating table and add boiling water to the cup with the coffee powder.

Wait about *10...60* seconds until the mixture of water and ground coffee homogenizes and the coffee suspension settles on the bottom of the cup. The settling down of the coffee suspension causes the color of the foam/cream to change from dark brown to light brown.

The vibration frequency is chosen between *10...100* Hz at a vibration amplitude of *0.1...5.0* mm.

At this moment the vibrating table switches off and the portion of coffee can be served.

The vibration frequency and vibration amplitude are adjusted prior to preparation to an optimal maximum that the liquid in the cup does not splash, does not spill out of the cup, and the homogenization and settling occur in the shortest possible time.

### Bibliography

1. FRAZER,S., Reciprocating coffee filter, US patent 9,867,494 B2, Patent date: 16^{th} of January 2018.
2. SARGENT, J.A., HARDESTY, D.C., Method of making flavored coffee compositions, US patent 7,763,300 B2, Patent date: 27^{th} of July 2010
3. GOTO, Y., UNO, K., TANAKA, S., Concentrated coffee extract and process for producing the same, US patent 7,794,772 B2, Patent date: 14^{th} of September 2010.
4. RIGHETTI, M., Device for producing coffee, US patent 8,250,971 B2, Patent date: 28^{th} of August 2012.
5. NOCERA, R., Method for the production of coffee, US patent 8,758,844 B2, Patent date: 24^{th} of June 2014.

## Claims

1. The process of preparing coffee intended, above all, for individual, personalized consumption, by infusion of finely grinded coffee, in boiling water, ***is characterized by the fact that*** for a portion of coffee a preparation cup with a volume of about 150-200 ml with walls is used of about *1...10* mm thick, made of specific materials such as glass, porcelain, ceramic, etc., in the cup preheated to about *30... 70°C,* after which, to prepare a portion of coffee, in the cup put approx. *20...30* g of finely grinded coffee, and the cup is placed on a vibrating table, which is put into operation, and the boiling water is added to the cup with coffee powder and a waiting time of about *10...60* seconds is required until the infusion mixture is homogenized and the coffee suspension settles at the bottom of the cup.

2. The process as in claim 1 ***is characterized by the fact that*** the vibration frequency and amplitude of table vibrations are adjusted prior to coffee-making to the vibration frequency between *10..100* Hz at a vibration amplitude of *0.1...5.0* mm so that the liquid in the cup does not splash, does not spill from the cup, and the homogenization and settling should occur in the shortest possible time and the duration of the vibration is chosen so that the color of the foam/cream changes from dark brown to light brown depending on the desired taste.
